# EUROPÄISCHE PATENTSCHRIFT

(11) **EP 2 349 887 B1**
(45) Veröffentlichungstag und Bekanntmachung des Hinweises auf die Patenterteilung: **03.04.2013**
(21) Anmeldenummer: 08875032.8
(22) Anmeldetag: 24.11.2008
(51) Int. Cl.: B65G 69/04

(54) **VORRICHTUNG ZUR STREUUNG VON SCHÜTTGUT**
DEVICE FOR SCATTERING BULK MATERIAL
DISPOSITIF POUR DISPERSER DES MATIÈRES EN VRAC

(43) Veröffentlichungstag der Anmeldung: 03.08.2011
(73) Patentinhaber: RWE Power Aktiengesellschaft, 45128 Essen (DE)
(72) Erfinder: KLUTZ, Hans-Joachim, 50374 Erftstadt (DE)
(74) Vertreter: Polypatent
(86) Internationale Anmeldenummer: PCT/EP2008/009924
(87) Internationale Veröffentlichungsnummer: WO 2010/057511

(56) Entgegenhaltungen:
- EP-A- 0 343 466
- WO-A-2005/097635
- FR-A- 2 595 338
- US-A- 3 773 165

## Beschreibung

Die Erfindung betrifft eine Vorrichtung zur Streuung von Schüttgut, umfassend eine Verteilerschurre mit einem Aufgabebereich und einem Abwurfbereich, wobei die Verteilerschurre um eine in Einbaulage in Gewichtskraftrichtung des Schüttguts vertikal verlaufende Mittelachse drehbar und bezüglich dieser Mittelachse in einem Winkel geneigt gelagert ist, wobei die Verteilerschurre eine in Drehrichtung die Vorderseite bildende erste führende Längsseite und eine, bezogen auf die Drehrichtung nacheilende, zweite Längsseite aufweist und wobei wenigstens die zweite Längsseite die Abwurfseite der Verteilerschurre bildet.

Eine derartige Vorrichtung ist beispielsweise aus der EP 0 343 466 B1 bekannt. Die EP 0 343 466 B1 beschreibt eine Vorrichtung zur gleichmäßigen Verteilung von Material auf einer Kreisfläche mit Hilfe einer geneigten Drehschurre, deren Neigungswinkel einstellbar ist. Die Vorrichtung dient zur Verteilung von schütt- und rieselförmigen Materialien in Form von Staub, Körnern, Pulvern oder in sonstiger Form, die in aufeinander folgenden gleichmäßigen Schichten in einen in der Regel zylindrischen Raum gegeben werden. Da es bei derartigen Anwendungsfällen darauf ankommt, die Materialien gleichmäßig im Kreis zu verteilen, wird in der EP 0 343 466 B1 für die Verteilerschurre der Vorrichtung eine besondere Geometrie vorgeschlagen. Die Verteilerschurre weist eine lange ebene Gleitfläche mit einer gradlinig bezogen auf die Drehrichtung die Vorderseite der Schurre bildenden ersten Längsseite auf, die mit einer Rückhaltekante versehen ist, während die gegenüberliegende zweite Längsseite die Abwurfseite bildet. Die die Abwurfseite bildende Längsseite ist etwa S-förmig gestaltet. Diese Gestaltung trägt der Forderung Rechnung, dass die am Ende der Schurre abgeworfene Materialmenge größer sein muss als die Menge, die vom oberen Teil der Schurre aus in die Mitte fällt, da die lineare Geschwindigkeit der Schurre vom Mittelpunkt zur Peripherie zunimmt, so dass die pro Zeiteinheit von der Schurre abgedeckte Fläche proportional zum Quadrats des Radius zunimmt.

Die in der EP 0 343 466 B1 beschriebene Schurrengeometrie ist im Hinblick auf eine möglichst gleichmäßige Streuverteilung des Schuttgutes vorteilhaft.

Die Vorrichtung ist allerdings mit dem Nachteil behaftet, dass die Schurrengeometrie zur Erreichung eines optimalen Streuverhaltens bzw. Verteilverhaltens nicht im voraus berechnet werden kann, da je nach Einsatzgebiet vielfältige Einflussfaktoren, Stoffeigenschaften und Wechselwirkungen zwischen Material und Schurrenoberfläche mathematisch nicht mit ausreichender Genauigkeit beschrieben werden können.

Insbesondere bei der Einbringung von Rohbraunkohle in einen Wirbelschichtstrockner ist eine möglichst gleichmäßige Verteilung der Rohkohle auf die Wirbelschichtoberfläche erwünscht. Um eine möglichst ungestörte Wirbelschicht erhalten zu können, ist eine konstante spezifische Flächenbelastung der Wirbelschichtoberfläche durch den Materialeintrag erstrebenswert, d.h. auf jedem Flächenelement der Abwurfkreisfläche soll statistisch möglichst die gleiche Kohlenmenge abgeworfen werden. Gerade bei der Handhabung von Rohbraunkohle, die in grubenfeuchtem Zustand einen Wasseranteil von bis zu 65 % aufweisen kann, sind die Wechselwirkungen zwischen Material und Schurrenoberfläche schwer zu fassen.

Die im Sinne der EP 0 343 466 B1 angestrebte optimale Geometrie der Schurre müsste daher für jeden Anwendungsfall im Maßstab von 1:1 des jeweiligen Anwendungsfalls experimentell ermittelt werden. Solche experimentelle Untersuchungen sind allerdings aufwendig und kostenintensiv, so dass sie in der Regel nicht durchgeführt werden können.

Die in der EP 0 343 466 B1 beschriebene Verteilerschurre ist in Neigung und Drehzahl variabel, was erfahrungsgemäß nicht ausreicht, um das Verteilverhalten während des Betriebes zu optimieren.

Der Erfindung liegt daher die Aufgabe zugrunde, eine Vorrichtung der eingangs genannten Art so zu verbessern, dass eine möglichst gleichmäßige Verteilung des Schüttguts auch bei sich ändernden Betriebsbedingungen und/oder sich ändernden Materialeigenschaften erreicht werden kann.

Die der Erfindung zugrunde liegende Aufgabe wird gelöst durch eine Vorrichtung zur Streuung von Schüttgut, umfassend eine Verteilerschurre mit einem Aufgabebereich und einem Abwurfbereich, wobei die Verteilerschurre um eine in Einbaulage in Gewichtskraftrichtung des Schüttguts vertikal verlaufende Mittelachse drehbar und bezüglich dieser Mittelachse in einem Winkel geneigt gelagert ist, wobei die Verteilerschurre eine in Drehrichtung die Vorderseite bildende erste führende Längsseite und eine, bezogen auf die Drehrichtung nacheilende, zweite Längsseite aufweist und wobei wenigstens die zweite Längsseite die Abwurfseite der Verteilerschurre bildet. Die Vorrichtung gemäß der Erfindung zeichnet sich dadurch aus, dass die Verteilerschurre bezüglich der vertikalen Mittelachse quer verschiebbar ist. Eine solche quer verschiebliche Lagerung der Verteilerschurre ermöglicht die Verschiebung des Aufgabepunktes im Aufgabebereich der Verteilerschurre. Der aus einer Zuführschurre auf die Verteilerschurre auftretende Materialstrom kann je nach Einstellung der Verteilerschurre mehr oder weniger außerhalb der Mittellängsachse der Verteilerschurre auf den Aufgabebereich auftreffen, so dass der Abstand des Materialstroms zur Abwurfseite mehr oder weniger groß ist. Auf diese Art und Weise lässt sich die Partikel-Bahnkurve des über die Schurre gleitenden Kohlestroms gezielt beeinflussen.

Besonders vorteilhaft ist es, wenn die Verteilerschurre um ihre Längsachse schwenkbar gelagert ist. Beispielsweise ist es Vorteilhaft, wenn die Querneigung der Verteilerschurre einstellbar ist.

Durch eine Kombination der einstellbaren Verschiebung des Aufgabenpunktes des zu verteilenden Materials und der einstellbaren Neigung der Verteilerschurre in Richtung auf die Abwurfkante, lässt sich eine besonders günstige Beeinflussung des Materialstroms erreichen.

Zweckmäßigerweise ist der Neigungswinkel der Verteilerschurre bezüglich einer horizontalen Streukreisebene einstellbar. Darüber hinaus ist es sinnvoll, die Vorrichtung so auszugestalten, dass die Drehgeschwindigkeit der Verteilerschurre variabel ist.

Um einen größeren Einstellbereich der Schurre im Sinne eines großen oder kleinen Streukreisradius zu erzielen, ist es vorteilhaft, wenn der Aufgabebereich der Verteilerschurre in Längsrichtung gekrümmt ist. Dadurch ist es möglich, die Schurre mit kleinerer Neigung zu betreiben, wobei bei konstanter Schurrenlänge eine größer Verteilerfläche abdeckbar ist. Durch die Krümmung der Schurre im Aufgabebereich wird dort eine geringere Verzögerung des Materialstroms als im Abwurfbereich erreicht, ohne dass es hierzu erforderlich wäre, den Anstellwinkel der Verteilerschurre in Bezug auf eine Horizontale zu verändern.

Besonders vorteilhaft ist es, wenn die Verteilerschurre beheizt ist. Hierdurch lassen sich Materialanbackungen auf der Schurrenoberfläche vermeiden. Dies trägt ebenfalls zu einem optimierten Verteilverhalten bei, Störungen der Partikel - Bahnkurve des Materials aufgrund von feuchtigkeitsbedingten Anbackungen werden vermieden.

Besonders vorteilhaft ist es, wenn die Verteilerschurre zumindest im Bereich ihrer Gleitfläche als Hohlprofil ausgebildet ist. Zwecks Beheizung kann die Verteilerschurre an eine Dampfzufuhr angeschlossen sein.

Bei einer besonders vorteilhaften Ausgestaltung der Vorrichtung gemäß der Erfindung ist vorgesehen, dass wenigstens ein Dampfanschluss an einem als Drehgelenk ausgebildeten Verteiler vorgesehen ist, der in der in Einbaulage vertikalen Mittelachse der Vorrichtung angeordnet ist. Der Verteiler kann bezüglich der Verteilerschurre drehfest angeordnet sein und sich mit der Verteilerschurre bezüglich einer ortsfest verlegten Dampfzuleitung drehen.

Zweckmäßigerweise umfasst die Verteilerschurre weiterhin einen Kondensatablauf, der ebenfalls an den Verteiler angeschlossen ist.

Hierdurch kann die Verteilerschurre mit Niederdruckdampf aus einem Dampferzeugungsprozess beheizt werden. Dies ist besonders vorteilhaft, wenn die Vorrichtung der Erfindung zur Einbringung von Rohkohle in einen Wirbelschichttrockner bei einem Verfahren zur Dampferzeugung aus Braunkohle eingesetzt wird. Bei derartigen Verfahren hat sich die Vortrocknung der Braunkohle in einem Wirbelschichttrockner als energetisch günstig herausgestellt.

Die Erfindung wird nachstehend anhand eines in der Zeichnung dargestellten Ausführungsbeispiels erläutert.

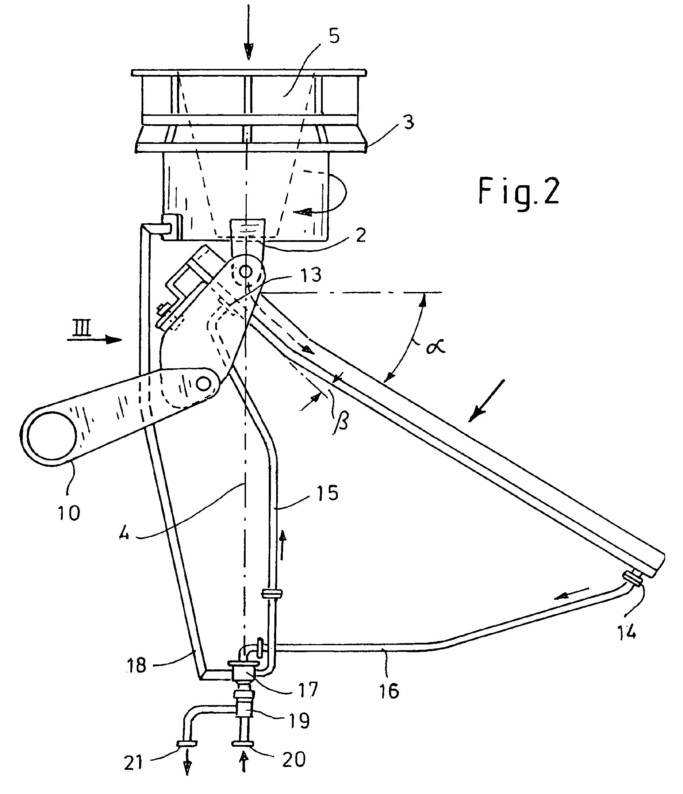

Es zeigen:
Figur 1
   Eine stark vereinfachte perspektivische Ansicht der Vorrichtung gemäß der Erfindung.,
Figur 2
   Eine schematische Seitenansicht der Vorrichtung gemäß der Erfindung und
Figur 3
   Eine Ansicht aus Richtung des Pfeils III. in Figur 2.

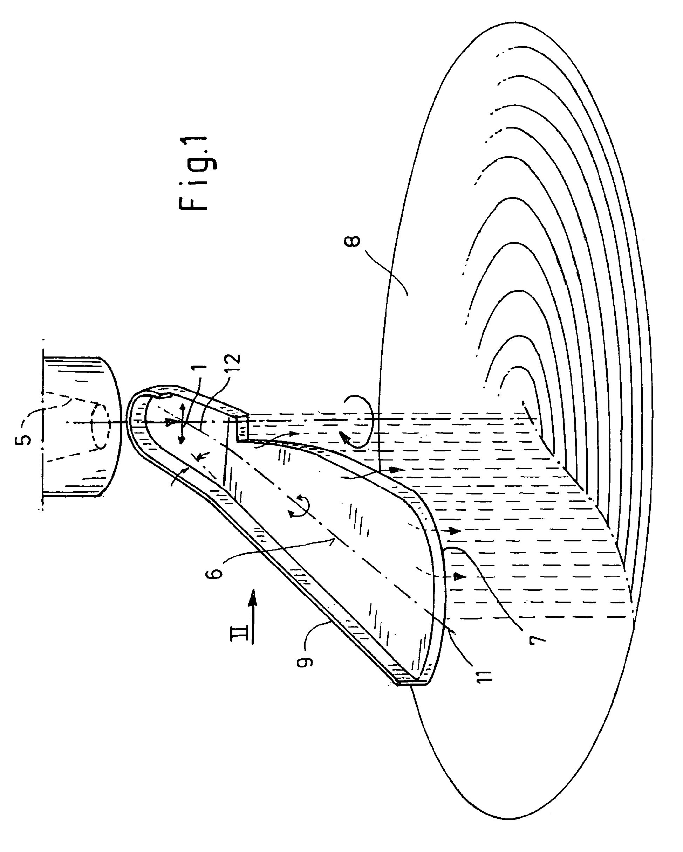

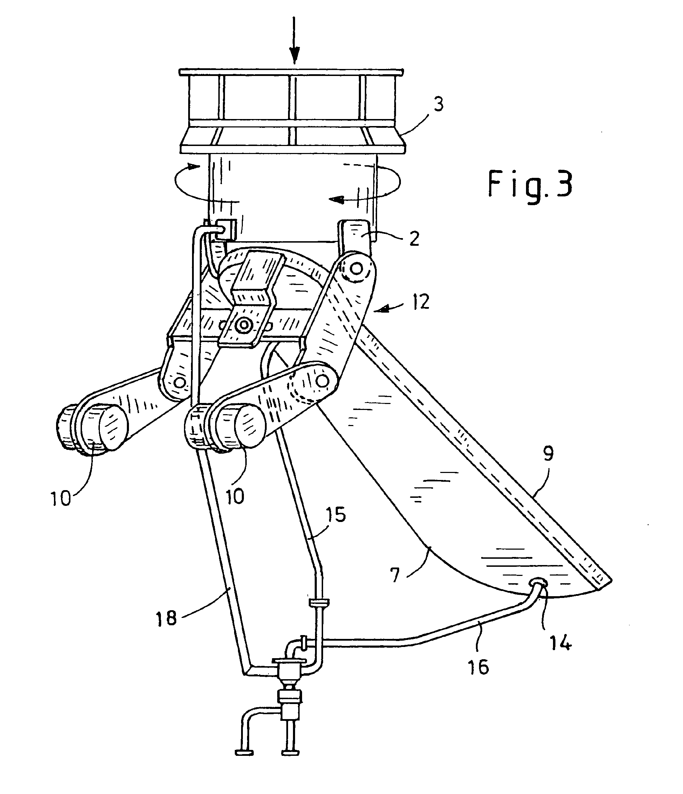

Im folgenden wird zunächst Bezug genommen auf die Figuren 2 und 3. Die Vorrichtung gemäß der Erfindung umfasst eine mit 1 bezeichnete Verteilerschurre, die über einen Haltebügel 2 starr mit einem Drehkranz 3 verbunden ist. Der Drehkranz ist mit nicht dargestellten Antriebsmitteln versehen, über welche dieser mit der daran befestigten Verteilerschurre 1 um eine vertikale Achse 4 in gleichmäßige Drehungen versetzt wird. Der Drehkranz 3 kann hierfür mit einer umlaufenden, nicht dargestellten Verzahnung versehen sein, die mit einem Antriebsritzel eines Elektromotors zusammenwirkt. Der Drehsinn der Anordnung ist mit den in den Figuren 1 bis 3 eingezeichneten Pfeilen veranschaulicht. Bei dem dargestellten Ausführungsbeispiel dreht sich die Verteilerschurre 1 im Uhrzeigersinn.

Innerhalb des Drehkranzes 3 und oberhalb der Verteilerschurre 1 ist eine Zuführschurre 5 zentral angeordnet, über welches schüttfähiges Material, beispielsweise feuchte Rohbraunkohle auf die Verteilerschurre 1 aufgegeben wird.

Die Mittellängsachse der Zuführschurre 5 ist mit der vertikalen Drehachse 4 der Verteilerschurre 1 deckungsgleich.

Die Verteilerschurre 1 ist insgesamt in Bezug auf eine horizontale Streukreisebene um den Winkel α geneigt. Der Neigungswinkel α der Verteilerschurre 1 ist einstellbar.

Über eine nicht dargestellte Zellenradschleuse wird beispielsweise Rohkohle über die Zuführschurre 5 auf die Verteilerschurre 1 aufgegeben und rutscht unter dem Einfluss der Schwerkraft über die S-förmig gekrümmte Abwurfkante 7, wobei diese schwerkraftbedingte Bewegung des Schüttgutes durch eine Drehbewegung der Verteilerschurre 1 im Uhrzeigersinn überlagert wird. Die Drehgeschwindigkeit der Verteilerschurre 1 ist variabel. Dabei wird der in Figur 1 andeutungsweise dargestellte Streukreis 8 erzeugt. Das Material wird kreisförmig gleichmäßig über den Streukreis 8 abgeworfen. Auf der in Drehrichtung der Verteilerschurre 1 nacheilenden Abwurfkante 7 abgewandten Seite der Verteilerschurre 1 ist diese mit einem Rückhalterand 9 versehen, der die in Drehrichtung führende Längsseite der Verteilerschurre 1 bildet.

Wie vorstehend bereits erwähnt, ist ein Neigungswinkel α bezogen auf eine horizontale Streukreisebene der Verteilerschurre in bekannter Art und Weise in verschiedenen Stufen einstellbar. Um die Einstellbarkeit des Neigungswinkels zu erleichtern, ist die Verteilerschurre 1 auf Ihrer der Schurrenfläche 6 abgewandten Seite mit Gegengewichten 10 versehen. Durch die Ausbalancierung der Verteilerschurre 1 mit Gegengewichten wird darüber hinaus in vorteilhafter Art und Weise eine Entlastung der Lagerung der Verteilerschurre 1 bewirkt.

Mit 11 ist die Mittellängsachse der Verteilerschurre bezeichnet. Diese befindet sich bei der in Figur 1 gezeichneten Darstellung der Verteilerschurre bezüglich der vertikalen Drehachse 4 in der Neutrallage. Neutrallage bedeutet, dass sich die vertikale Drehachse 4 und die Mittellängsachse 11 der Verteilerschurre schneiden, sodass der Materialstrom zentral im Aufgabebereich 12 der Verteilerschurre 1 auftrifft.

Wie dies ebenfalls mit Pfeilen andeutungsweise dargestellt ist, lässt sich die Verteilerschurre 1 aus dieser Neutrallage quer verstellen, so dass der Aufgabepunkt im Aufgabebereich 12 der Verteilerschurre 1 bezogen auf die Mittellängsachse 11 der Verteilerschurre 1 auswandert. Der Aufgabepunkt kann entweder näher in Richtung auf den Rückhalterand 9 oder näher in Richtung auf die Abwurfskante 7 verstellt werden.

Darüber hinaus ist die Querneigung der Verteilerschurre 1 um die Mittellängsachse 11 verstellbar, so dass je nach Querneigung mehr Material in dem stromaufwärts gelegenen Bereich der Abwurfkante 7 oder mehr Material in dem stromabwärts gelegenen Bereich der Abwurfkante 7 abgeworfen wird. Wird die Querneigung der Verteilerschurre 1 so eingestellt, dass diese Gefälle in Richtung auf die Abwurfkante 7 aufweist, wird mehr Material im oberen, stromaufwärtigen Bereich der Abwurfkante 7 abgeworfen. Wird die Querneigung hingegen so eingestellt, dass Gefälle in Richtung auf den Rückhalterand entsteht, wird mehr Material im stromabwärtigen Bereich der Abwurfkante 7 abgeworfen.

Um den Radius des Streukreises 8 über einen verhältnismäßig großen Einstellbereich variieren zu können, ist der Aufgabebereich 12 in Richtung der Mittellängsachse 11 der Verteilerschurre 1 gekrümmt ausgebildet, so dass der Neigungswinkel α gegenüber einer horizontalen Streukreisebene im Aufgabebereich 12 der Verteilerschurre um den Betrag des in Figur 2 eingezeichneten Winkels β größer ist. Hierdurch erfährt der Materialstrom im Aufgabebereich 12 eine geringere Verzögerung, die es gestattet, den Neigungswinkel α der Verteilerschurre 1 insgesamt kleiner zu wählen.

Der Aufgabebereich 12 der Verteilerschurre 1 muss nicht notwendigerweise gekrümmt ausgebildet sein, vielmehr kann die Veränderung des Neigungswinkels auch diskontinuierlich erfolgen.

Die Verteilerschurre 1 ist zumindest im Bereich der Schurrenfläche 6 doppelwandig ausgebildet und mit Dampf als Heizmedium durchströmt. Auf der der Schurrenfläche 6 abgewandten Seite der Verteilerschurre ist in dem Aufgabebereich 12 ein Dampfeintritt 13 vorgesehen, an dem in Strömungsrichtung abliegenden Ende der Verteilerschurre 1 hingegen ein Kondensataustritt 14. An den Dampfeintritt 13 ist eine Dampfzufuhrleitung 15 angeschlossen, an den Kondensataustritt 14 hingegen eine Kondensatsammelleitung 16. Die Kondensatsammelleitung 16 und die Dampfzufuhrleitung 15 sind wiederum an einen Verteiler 17 angeschlossen, der über einen Halterarm 18 fest mit dem Drehkranz 3 verbunden ist.

Andererseits ist der Verteiler 17 drehbar mit einem stationär angeordneten Anschlussstück 19 verbunden, welches wiederum in eine Dampfleitung 20 und einer Kondensatleitung 21 mündet. Der Verteiler 17 und das drehbar mit diesem verbundene Anschlussstück 19, die selbstverständlich gegeneinander abgedichtet sind, sind in der vertikalen Drehachse 4 angeordnet. Die Dampfzufuhrleitung 15 und die Kondensatsammelleitung 16 sowie der Verteiler 17 können die Drehbewegung der Verteilerschurre 1 mit vollziehen, wohingegen das Anschlussstück 19, die Dampfleitung 20 und die Kondensatleitung 21 ortsfest angeordnet sind. Diese Konstruktion ermöglicht es, die Verteilerschurre 1 in einfacher Art und Weise mit Niederdruckdampf aus dem Dampferzeugungsprozess zu beheizen.

### Bezugszeichenliste

- 1: Verteilerschurre
- 2: Haltebügel
- 3: Drehkranz
- 4: Vertikale Drehachse
- 5: Zuführschurre
- 6: Schurrenfläche
- 7: Abwurfkante
- 8: Streukreis
- 9: Rückhalterand
- 10: Gegengewichte
- 11: Mittellängsachse
- 12: Aufgabebereich
- 13: Dampfeintritt
- 14: Kondensataustritt
- 15: Dampfzufuhrleitung
- 16: Kondensatsammelleitung
- 17: Verteiler
- 18: Halterarm
- 19: Anschlussstück
- 20: Dampfleitung
- 21: Kondensatleitung

## Patentansprüche

1. Vorrichtung zur Streuung von Schüttgut, umfassend eine Verteilerschurre (1) mit einem Aufgabebereich (12) und mit einem Abwurfbereich, wobei die Verteilerschurre (1) um eine in Einbaulage in Gewichtskraftrichtung des Schüttgutes vertikal verlaufende Mittelachse (4) drehbar und bezüglich dieser Mittelachse in einem Winkel geneigt gelagert ist, wobei die Verteilerschurre (1) eine in Drehrichtung die Vorderseite bildende erste führende Längsseite und eine, bezogen auf die Drehrichtung nacheilende, zweite Längsseite aufweist und wobei wenigstens die zweite Längsseite die Abwurfseite der Verteilerschurre (1) bildet, **dadurch gekennzeichnet, dass** die Verteilerschurre (1) bezüglich der vertikalen Mittelachse quer verschiebbar ist.

2. Vorrichtung nach Anspruch 1, **dadurch gekennzeichnet, dass** die Verteilerschurre (1) um ihre Mittellängsachse (11) schwenkbar gelagert ist.

3. Vorrichtung nach Anspruch 2, **dadurch gekennzeichnet, dass** die Querneigung der Verteilerschurre (1) einstellbar ist.

4. Vorrichtung nach einem der Ansprüche 1 oder 2, **dadurch gekennzeichnet, dass** der Neigungswinkel der Verteilerschurre (1) bezüglich einer horizontalen Streukreisebene einstellbar ist.

5. Vorrichtung nach einem der Ansprüche 1 bis 4, **dadurch gekennzeichnet, dass** der Aufgabebereich der Verteilerschurre (1) einen anderen Neigungswinkel bezüglich einer horizontalen Streukreisebene als der Abwurfbereich aufweist.

6. Vorrichtung nach Anspruch 5, **dadurch gekennzeichnet, dass** der Aufgabebereich der Verteilerschurre (1) in Längsrichtung der Verteilerschurre (1) gekrümmt ist.

7. Vorrichtung nach einem der Ansprüche 1 bis 5, **dadurch gekennzeichnet, dass** die Verteilerschurre (1) beheizt ist.

8. Vorrichtung nach einem der Ansprüche 1 bis 7, **dadurch gekennzeichnet, dass** die Verteilerschurre (1) zumindest im Bereich ihrer Gleitfläche als Hohlprofil ausgebildet ist.

9. Vorrichtung nach Anspruch 8, **dadurch gekennzeichnet, dass** die Verteilerschurre (1) zwecks Beheizung an eine Dampfzufuhr angeschlossen ist.

10. Vorrichtung nach Anspruch 9, **dadurch gekennzeichnet, dass** wenigstens ein Dampfanschluss an einem als Drehgelenk ausgebildeten Verteiler (17) vorgesehen ist, der in der vertikalen Mittelachse (4) der Vorrichtung angeordnet ist.

11. Vorrichtung nach Anspruch 10, **dadurch gekennzeichnet, dass** der Verteiler (17) bezüglich der Verteilerschurre (1) drehfest angeordnet ist.

12. Vorrichtung nach einem der Ansprüche 10 oder 11, **dadurch gekennzeichnet, dass** die Verteilerschurre (1) einen Kondensatablauf aufweist, der an den Verteiler (17) angeschlossen ist.

## Claims

1. Apparatus for scattering bulk material, comprising a distributor chute (1) having a feed area (12) and having a discharge area, wherein the distributor chute (1) is mounted so as to be rotatable about a centre axis (4), running vertically in the installed position in the gravity direction of the bulk material, and so as to be inclined at an angle with respect to this centre axis, wherein the distributor chute (1) has a first guiding longitudinal side, which forms the front side in the direction of rotation, and a second longitudinal side, which trails with respect to the direction of rotation, and wherein at least the second longitudinal side forms the discharge side of the distributor chute (1), **characterised in that** the distributor chute (1) is displaceable transversely with respect to the vertical centre axis.

2. Apparatus according to Claim 1, **characterised in that** the distributor chute (1) is mounted so as to be pivotable about its centre longitudinal axis (11).

3. Apparatus according to Claim 2, **characterised in that** the lateral inclination of the distributor chute (1) is adjustable.

4. Apparatus according to one of Claims 1 and 2, **characterised in that** the inclination angle of the distributor chute (1) is adjustable with respect to a horizontal scattering circle plane.

5. Apparatus according to one of Claims 1 to 4, **characterised in that** the feed area of the distributor chute (1) has a different inclination angle with respect to a horizontal scattering circle plane than the discharge area.

6. Apparatus according to Claim 5, **characterised in that** the feed area of the distributor chute (1) is curved in the longitudinal direction of the distributor chute (1).

7. Apparatus according to one of Claims 1 to 5, **characterised in that** the distributor chute (1) is heated.

8. Apparatus according to one of Claims 1 to 7, **characterised in that** the distributor chute (1) is in the form of a hollow profile, at least in the area of its sliding surface.

9. Apparatus according to Claim 8, **characterised in that** the distributor chute (1) is connected to a steam supply, for heating purposes.

10. Apparatus according to Claim 9, **characterised in that** at least one steam connection to a distributor (17) is provided, which distributor is in the form of a rotary joint and is arranged on the vertical centre axis (4) of the apparatus.

11. Apparatus according to Claim 10, **characterised in that** the distributor (17) is arranged such that it is rotationally fixed with respect to the distributor chute (1).

12. Apparatus according to one of Claims 10 and 11, **characterised in that** the distributor chute (1) has a condensate outlet which is connected to the distributor (17).

## Revendications

1. Dispositif d'épandage de produit en vrac comprenant une goulotte de distribution (1) avec une zone de chargement (12) et avec une zone d'éjection, la goulotte de distribution (1) étant logée de manière rotative autour d'un axe central (4) vertical en position de montage dans le sens de la gravité du produit en vrac et de manière inclinée d'un certain angle par rapport à cet axe central, la goulotte de distribution (1) comprenant un premier côté longitudinal de guidage constituant le côté avant dans le sens de rotation et un deuxième côté longitudinal en arrière par rapport au sens de rotation, et au moins le deuxième côté longitudinal formant le côté d'éjection de la goulotte de distribution (1), **caractérisé en ce que** la goulotte de distribution (1) est mobile transversalement par rapport à l'axe central vertical.

2. Dispositif selon la revendication 1, **caractérisé en ce que** la goulotte de distribution (1) est logée de manière pivotante autour de son axe longitudinal central (11).

3. Dispositif selon la revendication 2, **caractérisé en ce que** l'inclinaison transversale de la goulotte de distribution (1) est réglable.

4. Dispositif selon l'une des revendications 1 ou 2, **caractérisé en ce que** l'angle d'inclinaison de la goulotte de distribution (1) est réglable par rapport à un plan horizontal du cercle d'épandage.

5. Dispositif selon l'une des revendications 1 à 4, **caractérisé en ce que** la zone de chargement de la goulotte de distribution (1) présente un angle d'inclinaison par rapport à un plan horizontal du cercle d'épandage différent de celui de la zone d'éjection.

6. Dispositif selon la revendication 5, **caractérisé en ce que** la zone de chargement de la goulotte de distribution (1) est incurvée dans la direction longitudinale de la goulotte de distribution (1).

7. Dispositif selon l'une des revendications 1 à 5, **caractérisé en ce que** la goulotte de distribution (1) est chauffée.

8. Dispositif selon l'une des revendications 1 à 7, **caractérisé en ce que** la goulotte de distribution (1) est conçue comme un profilé creux au moins au niveau de sa surface de glissement.

9. Dispositif selon la revendication 8, **caractérisé en ce que** la goulotte de distribution (1) soit raccordée à une alimentation de vapeur pour le chauffage.

10. Dispositif selon la revendication 9, **caractérisé en ce qu'**au moins un raccord de vapeur est prévu sur un distributeur (17) conçu comme une articulation rotative, qui se trouve dans l'axe central vertical (4) du dispositif.

11. Dispositif selon la revendication 10, **caractérisé en ce que** le distributeur (17) est solidaire en rotation par rapport à la goulotte de distribution (1).

12. Dispositif selon l'une des revendications 10 ou 11, **caractérisé en ce que** la goulotte de distribution (1) comprend une évacuation de condensat raccordé au distributeur (17).
